# EUROPEAN PATENT SPECIFICATION

(11) **EP 4 317 561 B1**
(45) Date of publication and mention of the grant of the patent: **07.10.2026**
(21) Application number: 22781101.5
(22) Date of filing: 30.03.2022
(51) Int. Cl.: D04B 21/00, D04B 21/14, D04B 21/20, A41D 13/005

(54) **FABRIC**
GEWIRKE
TISSU

(30) Priority: 30.03.2021 JP 2021058676
(43) Date of publication of application: 07.02.2024
(73) Proprietor: Sankiconsys Co., Ltd., Tokyo, 132-0021 (JP)
(72) Inventor: MATSUMOTO Masahide, Tokyo 132-0021 (JP)
(74) Representative: Fleuchaus & Gallo Partnerschaft mbB
(86) International application number: PCT/JP2022/016032
(87) International publication number: WO 2022/210891

(56) References cited:
- EP-A1- 0 450 068
- CN-A- 104 337 003
- JP-A- 2003 041 463
- JP-A- 2008 302 906
- JP-A- 2009 235 583
- JP-A- 2011 127 237
- JP-A- 2013 039 535
- JP-A- 2018 111 902
- JP-A- 2020 204 131
- JP-A- H0 760 075
- JP-A- S54 101 976
- JP-A- S57 205 556
- JP-A- S6 127 085
- JP-A- S62 231 059
- JP-B1- 6 284 090
- JP-B1- S5 037 787
- JP-Y1- S4 814 062
- US-A1- 2016 029 711
- US-A1- 2017 172 227
- US-A1- 2020 178 621
- US-B1- 6 341 504

## Description

### Technical Field

The present invention relates to a fabric having a knitted material into which a hollow fiber membrane is knitted as an insertion thread.

### Background Art

A technique has been disclosed that uses a hollow fiber membrane as a weft thread of a warp knitting machine in order to produce a hollow fiber membrane module used for muddy water filtration (Patent Literature 1). In this technique, the hollow fiber membrane forms the weft thread that forms the knitted material.

A technique of using a hollow fiber membrane for an article of clothing has been disclosed (Patent Literature 2). The technique of Patent Literature 2 is shown in Figure 9. In this technique, a hollow fiber membrane 71 is attached to clothing 70, a pump 72 causes water to flow inside the hollow fiber membrane, and a cooling effect is obtained by the evaporation heat. Water is supplied from a water container 73 and the pump 72 is electrically operated. In this technique, sewing is a measure for attaching the hollow fiber membrane to the clothing. Since a needle is used to sew the hollow fiber membrane, there is a risk of damaging the hollow fiber membrane when the needle passes over the hollow fiber membrane or when the needle pierces the knitted material. In addition, when a plurality of hollow fiber membranes are arranged close to each other, the needle is likely to damage the hollow fiber membranes, making it difficult to attach the hollow fiber membranes through sewing.

Also, since the pump 72 is electrically operated as described above, a power source 74 and a switch 75 are necessary. However, from the viewpoint of comfort and design of clothing, it is preferable that there be no power source or switch. US 2020/178621 A1 discloses a fabric similar to that of Patent Literature 2 and according to the preamble of claim 1.

A cable has been disclosed in which conductive wires are knitted onto a surface of a knitted fabric made of conductive fibers, and the cable is stretchable in both the warp and weft directions (Patent Literature 3). In this technique, in order to obtain uniformity in conduction, a plurality of conductive wires are arranged in a crossed or intertwined manner so that they compensate for each other when a conductive wire breaks. In order to be stretchable in the warp and weft directions, the conductive wires are knitted in a corrugated shape extending in the weft direction.

Contrarily, when hollow fiber membranes are knitted into a knitted fabric, they do not have to be arranged so as to cross or intertwine with each other like conductive wires. The hollow fiber membranes are rather required to be in contact with the knitted material over as large an area as possible in order to promote water absorption and diffusion from the hollow fiber membranes, resulting in a large gap between the hollow fiber membranes. Further, each hollow fiber membrane is required to be in sufficient contact with the knitted material. In this way, in the concept for knitting threads as an insertion thread, the problem to be solved is different between knitting conductive wires and knitting hollow fiber membranes. Therefore, the concept for knitting conductive wires cannot be directly applied to the concept for knitting hollow fiber membranes.

Water passes through the internal cavity of a hollow fiber membrane, and thereby the surroundings of the hollow fiber membrane can be cooled by the water itself or by the evaporation heat. Further, when a hollow fiber membrane is used for an article of clothing, micropores on the surface of the hollow fiber membrane absorb perspiration inward from the surface of the fiber, conduct and diffuse the perspiration in the hollow portion, and release the perspiration to the outside of the fiber. Taking away the evaporation heat from the wearer's body can cool the body. However, the micropores on the surface are easily damaged by rubbing or pulling, so that hollow fiber membrane is difficult to use as a thread forming a woven fabric or a knitted fabric. Therefore, there has been demand for development of a technique that utilizes a hollow fiber membrane in a fabric and, in turn, in clothing.

### Citation List

### Patent Literature

Patent Literature 1: Japanese Patent Laid-Open No. 2009-235583
Patent Literature 2: Japanese Patent Laid-Open No. 2020-204131
Patent Literature 3: Japanese Patent Laid-Open No. 2016-92009

### Summary of Invention

### Technical Problem

A problem to be solved is to provide a fabric having a knitted material into which a hollow fiber membrane is knitted.

Another problem to be solved is to provide a configuration in which a liquid flows inside the hollow fiber membrane as one of forms of utilizing the fabric having the knitted material into which the hollow fiber membrane is knitted.

Still another problem to be solved is to provide a configuration that prevents a needle from penetrating into the hollow fiber membrane when the fabric having the knitted material into which the hollow fiber membrane is knitted is sewn on an article of clothing or when the fabrics each having the knitted material into which the hollow fiber membrane is knitted are sewn to produce an article of clothing.

Still another problem to be solved is to provide a configuration in which water coming out from the surface of the hollow fiber membrane knitted into the knitted material is easily absorbed and diffused.

### Solution to Problem

The problem is solved with a fabric according to claim 1.

The hollow fiber membrane is thus knitted into the knitted material as an insertion thread. This prevents rubbing or pulling that occurs when the hollow fiber membrane is knitted as a thread that forms the knitted material, so that damage is hardly caused on the surface of the hollow fiber membrane. Moreover, the hollow fiber membrane is used as an insertion thread, so that the amount of the hollow fiber membrane that is a material can be reduced.

In knitting the hollow fiber membrane, for example, the hollow fiber membrane is arranged on the surface of the knitted material so as to form a corrugated shape, and the knitted material is made of a stretchable material, resulting in a stretchable fabric.

When the fabric, which has the hollow fiber membrane appearing on one side of the knitted material, is attached to a product, the surface on which the hollow fiber membrane appears can face the side that is in contact with the product. As a result, the hollow fiber membrane is sandwiched between the object to which the fabric is attached and the knitted material, so that the hollow fiber membrane does not come into contact with the outside. The result is that damage to the hollow fiber membrane can be avoided.

A technique is known in which a knitted material is composed of an upper material and a lower material, and the upper material and the lower material are joined together to form a single layer structure. In knitting such a knitted material, the hollow fiber membrane is knitted as an insertion thread. When the hollow fiber membrane is knitted as an insertion thread, the knitting position is not shifted in the weft thread direction but kept at the same position. As a result, the upper material and the lower material are not joined together to form a double layer bag-like structure, and the hollow fiber membrane can be wrapped in the double layer bag-like structure. The hollow fiber membrane is thus wrapped in a double layer bag-like structure of the fabric, allowing the hollow fiber membrane to come into contact with the knitted material and to avoid contact with the outside so that the membrane is not damaged by rubbing.

A tubular cavity inside the hollow fiber membrane allows water to flow through this cavity.

Using water as the liquid allows the surroundings to be cooled by the water itself or by the evaporation heat.

As the hollow fiber membrane occupies more surface area of the knitted material, the water absorbing and diffusing effect of the hollow fiber membrane increases. Therefore, the knitted material is desirably in contact with the hollow fiber membrane over as large an area as possible. Therefore, for example, the hollow fiber membrane may be arranged so as to draw a corrugated shape. The direction of the hollow fiber membrane is greatly changed at the position corresponding to the apex of the corrugated shape. Therefore, the angle of the direction change is determined in consideration of the minimum bending radius of the hollow fiber membrane.

When water flows inside the hollow fiber membrane, the water oozes out from micropores on the surface of the hollow fiber membrane. The knitted material is maintained with water stored, and thereby the surroundings can be continuously cooled. Therefore, it is preferable that the surroundings of the hollow fiber membrane have high water absorption and water diffusibility. Such properties may be achieved by the knitted material itself made of a material with such properties through a known technique. Alternatively, such properties may be provided later through a known technique.

### Brief Description of Drawings

[Figure 1] Figure 1 shows Example 1.
[Figure 2] Figure 2 shows Example 2.
[Figure 3] Figure 3 shows Example 2.
[Figure 4] Figure 4 shows Example 3.
[Figure 5] Figure 5 shows Example 3 and Example 4.
[Figure 6] Figure 6 shows Example 4.
[Figure 7] Figure 7 shows Example 5.
[Figure 8] Figure 8 shows Example 5.

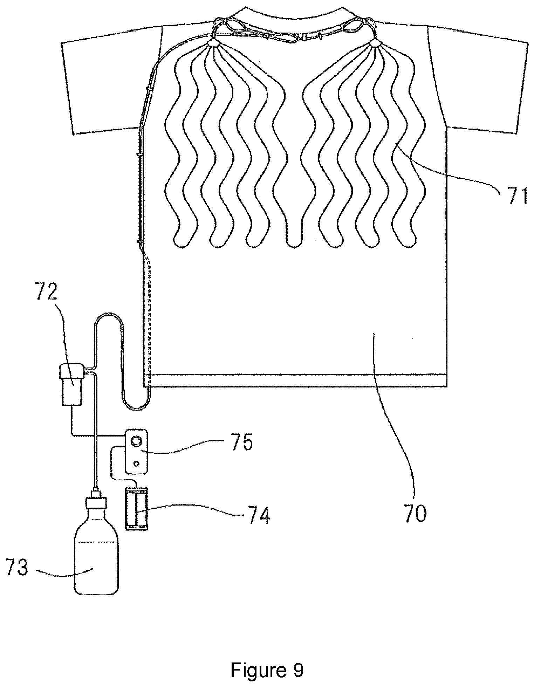

[Figure 9] Figure 9 shows a conventional example.

### Description of Embodiments

Preferred embodiments of the present invention will be described below with reference to drawings. Examples 1 and 2 are examples in which a knitted material is formed by warp knitting, and a hollow fiber membrane is knitted as an insertion thread in parallel with the formation of the knitted material. Example 1 is an example in which a hollow fiber membrane appears in a corrugated shape on one side of the knitted material, and Example 2 is an example in which a hollow fiber membrane extends while being wrapped in a double layer bag-like structure portion. Example 3 is an example in which water is allowed to flow inside a hollow fiber membrane knitted into a knitted material. Example 4 is an example in which a fabric into which hollow fiber membranes are knitted is made into a tape shape and is attached to an article of clothing for use. Example 5 is an example in which clearances are provided so that a needle does not penetrate into the hollow fiber membranes when a fabric into which hollow fiber membranes are knitted is sewn to be attached to a product.

### Example 1

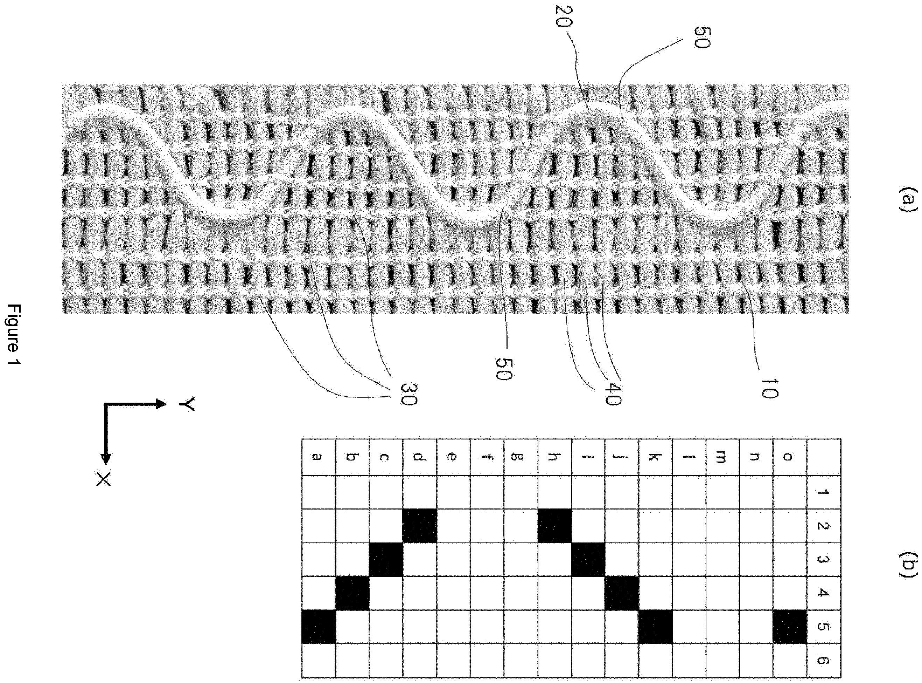

Example 1 is shown in Figure 1. As shown in Figure 1(a), in Example 1, a knitted material 10 is formed by warp knitting, and in parallel with the formation of the knitted material 10, a hollow fiber membrane 20 is knitted as an insertion thread inserted in the longitudinal direction.

In warp knitting, warp threads 30 extending in a Y-axis directionare intertwined and fixed with weft threads 40 extending in an X-axis direction to form stitches. The work in which the warp threads 30 is intertwined and fixed with one weft thread 40 successively advances in the X-axis direction, and then the work turns back when the intertwining and fixing has been performed up to the end of the weft thread 40, to sequentially form similar stitches on a different weft thread 40 adjacent in the Y-axis direction.

The method of knitting the hollow fiber membrane 20 is as follows. When the warp threads are intertwined and fixed with the weft threads to form the knitted material, the warp threads are intertwined and fixed with the hollow fiber membrane together with the weft threads to be intertwined and fixed. The threads seen at the parts indicated by reference numerals 50 in Figure 1(a) (the hollow fiber membrane stopper 50) are the warp threads each intertwined and fixed with the hollow fiber membrane and the weft thread together.

In Example 1, the hollow fiber membrane is arranged so as to form a corrugated shape on the knitted material. Therefore, the hollow fiber membrane stopper 50 is changed in position in a predetermined cycle. This will be described with reference to Figure 1(b). Figure 1(b) shows one stitch by a square space, and the black space is a position where the hollow fiber membrane is intertwined and fixed.

When the knitted material is formed, stitches are made in the order of 6a to 1a, 1b to 6b, 6c to 1c, (an omission of middle parts), 6m to 1m, 1n to 6n, and 6o to 1o. In other words, the warp threads 30 are intertwined and fixed with the weft threads 40 one by one in this order. When stitches 6a to 1a are made, at the position 5a, a warp thread overlaps, and is intertwined and fixed with the hollow fiber membrane 50 together with the weft thread to be intertwined and fixed. When stitches 1b to 6b are formed, a warp thread is intertwined and fixed with the hollow fiber membrane at 4b, which is shifted by one in the negative direction of the X axis. Thereafter, a warp thread is intertwined and fixed with the hollow fiber membrane at the position 3c when stitches 6c to 1c are made, and at position 2d when stitches 1d to 6d are made. When stitches 6e to 1e, 1f to 6f, and 6g to 1g are made, the warp threads are not intertwined and fixed with the hollow fiber membrane. When stitches of 1h to 6h are made, a warp thread is intertwined and fixed with the hollow fiber membrane at the position 2h. Thereafter, a warp thread is intertwined and fixed with the hollow fiber membrane at the position 3i when stitches 6i to 1i are made, at the position 4j when stitches 1j to 6j are made, and at the position 5k when stitches 6k to 1k are made. When stitches 1l to 6l, 6m to 1m, and 1n to 6n are made, the warp threads are not intertwined and fixed with the hollow fiber membrane. Up to this point, the one cycle is formed. Thereafter, this cycle is repeated.

Knitting as described above arranges the hollow fiber membranes in a corrugated shape on one side of the knitted material as shown in Figure 1(a). The warp threads of the knitted material overlap, and are intertwined and fixed with weft threads, so that the hollow fiber membrane is in tight contact with the knitted material. Therefore, the liquid oozing out from the micropores on the surface of the hollow fiber membrane efficiently permeates into the knitted material. Further, adjustment of the tension of the warp threads can prevent the hollow from collapsing according to the properties of the hollow fiber membrane. The apex angle of the corrugated shape can be determined according to the properties of the hollow fiber membrane to be knitted and fixed, and the positions where the hollow fiber membrane is knitted and fixed can be determined so that the membrane is arranged at such an angle.

The outer diameter, the inner diameter and the like of the hollow fiber membrane are determined from the viewpoints of having a large flow rate of water when water flows through it and having strength that does not cause problems in use. The small thickness makes knitting easily but reduces the amount of water. Also, increase in the water permeability through the micropores reduces the strength. A hollow fiber membrane suitable for use is, for example, as follows:
Outer diameter: 504 µm
Inner diameter: 264 µm
Water permeability: 155 L/ (m^{2•}bar^{•}hr)
Breaking load: 2.5N
Breaking strength: 17.6 MPa
Breaking elongation: 180%

### Example 2

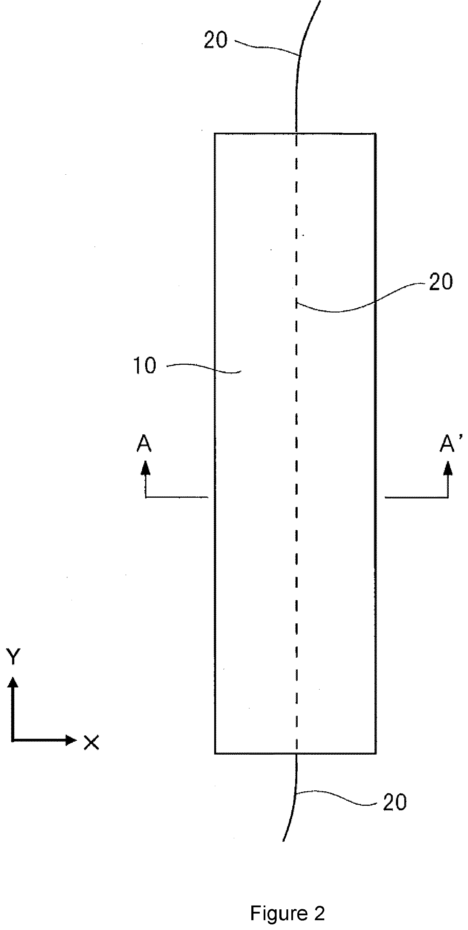

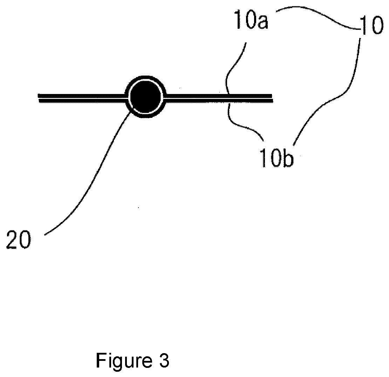

Figure 2 shows Example 2. In Example 2, the knitted material 10 is knitted by warp knitting, and in parallel with the formation of the knitted material 10, the hollow fiber membrane 20 is knitted as an insertion thread to be inserted in the longitudinal direction. Figure 3 is a cross-sectional view taken along a line A-A' of Figure 2. As shown in Figure 3, the knitted material 10 is composed of an upper material 10a and a lower material 10, and the hollow fiber membrane 20 extends in a bag-like space formed by the upper material and the lower material that are not joined. In parts other than the bag-like space, the upper material and the lower material are knitted and fixed to be joined together. The dotted line in Figure 2 indicates that there is a bag-like space formed by the upper material and the lower material that are not joined, and there is the hollow fiber membrane in the bag-like space.

The knitting method of the hollow fiber membrane in Example 2 is as follows. In Example 2, the weft threads are doubled with the weft threads forming the front side and the weft threads forming the back side. A hollow fiber membrane is knitted as an insertion thread that is inserted in the warp direction. The insertion thread is intertwined and fixed with the warp threads. In Example 2, the position where the insertion thread is intertwined and fixed is not shifted in the X-axis direction, the insertion thread is intertwined and fixed at the same position in the X-axis direction over the entire area, and the knitting proceeds in the Y-direction. This knitting method is a known knitting method. The following describes the arrangement, etc. of the threads at the position where the insertion threads are intertwined and fixed. First, a weft thread to be the back side is pulled in the weft direction, and then the insertion thread is pulled to the front side thereof in the warp direction and is prepared at the insertion position. Next, a weft thread to be the front side is pulled in the weft direction. At this stage, there are threads in the order of the back weft thread, the insertion thread, and the front weft thread; and then the warp threads are knitted so as to bind the above threads. In this way, the insertion thread to be knitted in the warp direction are knitted without touching the warp threads.

As a result, the part of the knitted material where the hollow fiber membrane is intertwined and fixed becomes a space, and the hollow fiber membrane is contained in this space.

### Example 3

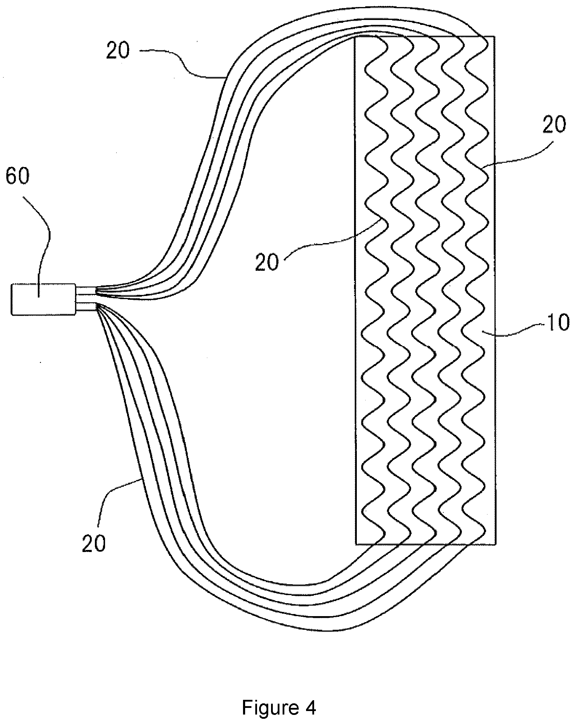

In Example 3, the following describes an example in which water is allowed to flow inside the hollow fiber membranes knitted into the knitted material. As shown in Figure 4, both open ends of each hollow fiber membrane 20 are connected to the pump 60. The pump 60 is made of an elastic body and can pump out water by pushing it by fingers. The water to be used is tap water.

The pump is a manual type that is pushed by fingers, so no power source or switch is required. Since no power source or switch is required, it is convenient to attach this fabric to a product and use it. In addition, manual type pump allows freely adjusting the flow rate of water. The preferred flow rate varies depending on the air temperature, humidity, water permeability of the hollow fiber membrane, etc. However, if this fabric is used for an article of clothing, for example, the wearer can manually adjust the flow rate.

When the amount of water decreases due to evaporation, the cover of the pump can be opened to replenish or replace the water inside. To prevent water putrefaction, it is preferable that tap water have a sterilizing and deodorizing function.

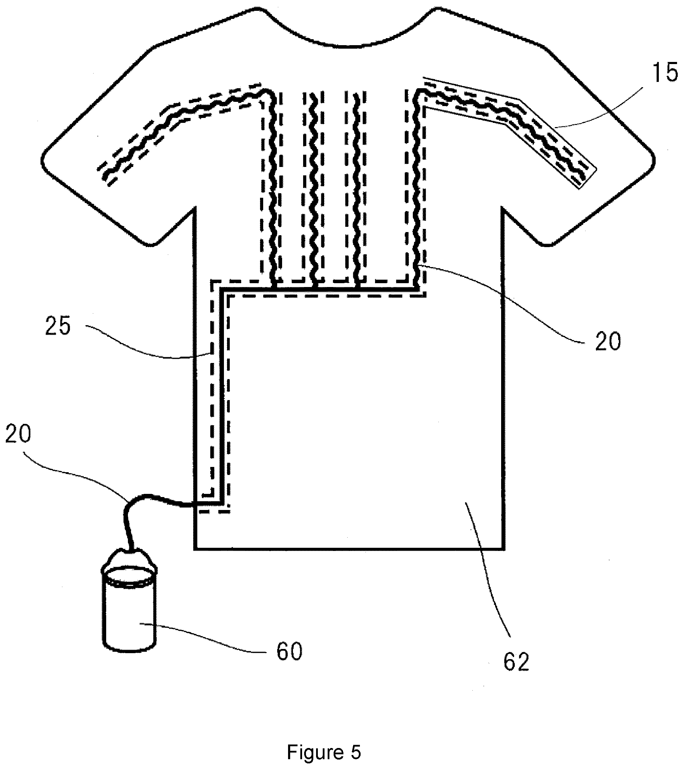

There can be a configuration in which the water flowing inside the hollow fiber membrane does not circulate. An example of the configuration without circulation is shown in Figure 5. In this case, only one end of the hollow fiber membrane is connected to the pump 60 and the other end is open. Most of the water flowing inside disappears by evaporation before reaching the other end.

### Example 4

In Example 4, a fabric in a tape shape into which the hollow fiber membrane is knitted is attached to an article of clothing. The "tape shape" means a narrow and long shape. The method of knitting the hollow fiber membranes, the number of hollow fiber membranes, and the material of the knitted material are selected depending on the location where the fabrics are attached.

The tape-shaped fabric is attached, by sewing or pasting it, to a part of an article of clothing that is desired to be cooled. From the viewpoint of attachment to an article of clothing, the width of the tape is easy to handle if it is, for example, about 1 cm to 2 cm.

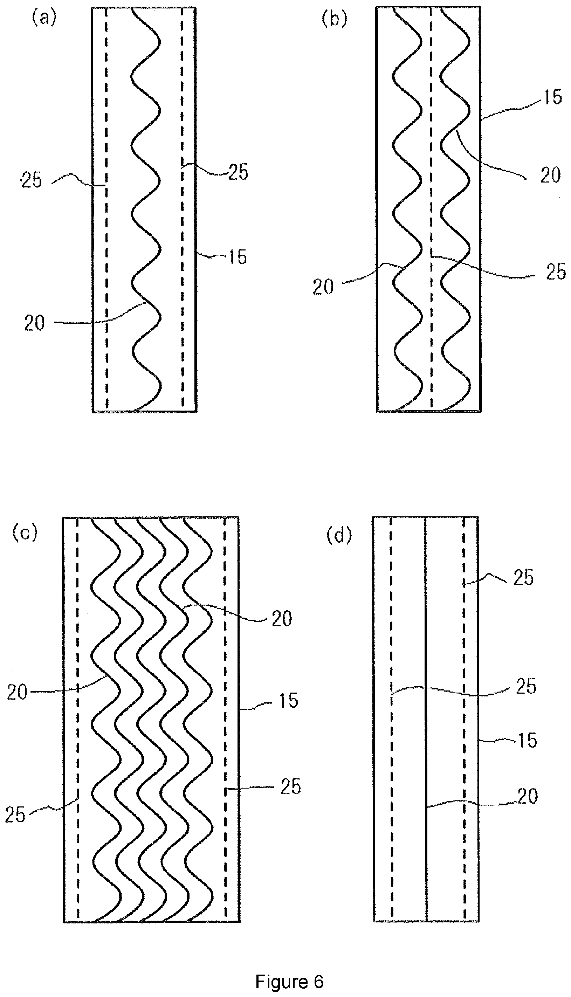

As shown in Figure 5, tape-shaped fabrics 15 are sewn onto an article of clothing 62. The tape-shaped fabric 15 has a hollow fiber membrane 20 knitted therein. A reference numeral 25 denotes a seam. One end of the hollow fiber membrane 20 is connected to the pump 60. Figure 6 illustrates relationships of arrangements of the hollow fiber membranes 20 and seams 25. In (a), (b) and (c), the hollow fiber membranes are knitted in a corrugated shape, and the tape-shaped fabric is stretchable in the longitudinal direction. They are suitable for attaching to parts that need to be stretchable. In this case, the knitted material is made of a stretchable thread. In (d), the hollow fiber membrane extends linearly and is not stretchable in the longitudinal direction.

As shown in (a) to (d), depending on the position of the hollow fiber membranes 20 knitted into the tape-shaped fabrics 15, the fabrics 15 are each sewn to the object at a point where the needle does not pass over the hollow fiber membranes 20.

In Example 4, the object to which the tape-shaped fabric is attached is an article of clothing, but the object to which it is attached is not limited to clothing. For cooling purposes, the tape-shaped fabrics can be used for furniture, car seats, exterior walls, and roofs of buildings. In addition, for the purposes of humidification, the tape-shaped fabrics can be used for indoor curtains and partitions.

The tape-shaped fabrics can also be used in various ways depending on the liquids that flow inside the hollow fiber membrane, and can be attached to products accordingly. For insect repellent purposes, the tape-shaped fabrics can be used in tents in addition to clothing. In addition, for the purpose of sterilization, the tape-shaped fabrics can be used for indoor curtains and partitions in addition to clothing.

### Example 5

In Example 5, description is made on an example of providing clearances so that the needle does not penetrate into the hollow fiber membrane in sewing the fabric into which the hollow fiber membrane is knitted.

The fabric into which the hollow fiber membrane is knitted goes through a sewing process when the fabric is used for a product. Also when the fabric into which the hollow fiber membrane is knitted is made into a tape shape and is sewn into a product, the fabric goes through a sewing process. Since water flows inside the hollow fiber membranes, it is necessary to avoid needles penetrating into the hollow fiber membranes in sewing. The part through which the needle passes in sewing is unknown when the fabric into which the hollow fiber membrane is knitted is produced. Therefore, it is necessary to be able to avoid penetration of the needle into the hollow fiber membrane regardless of which part is to be sewn.

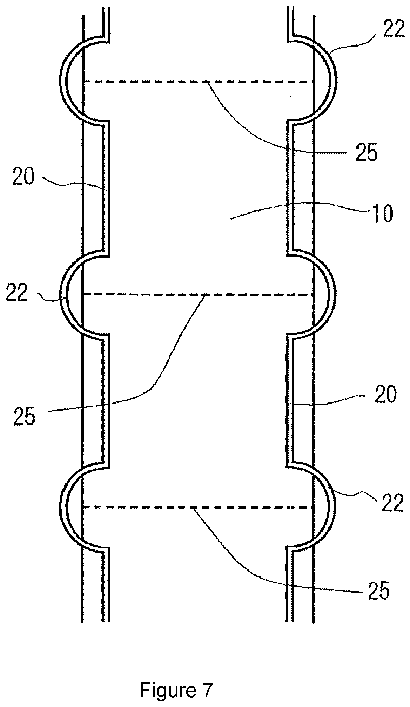

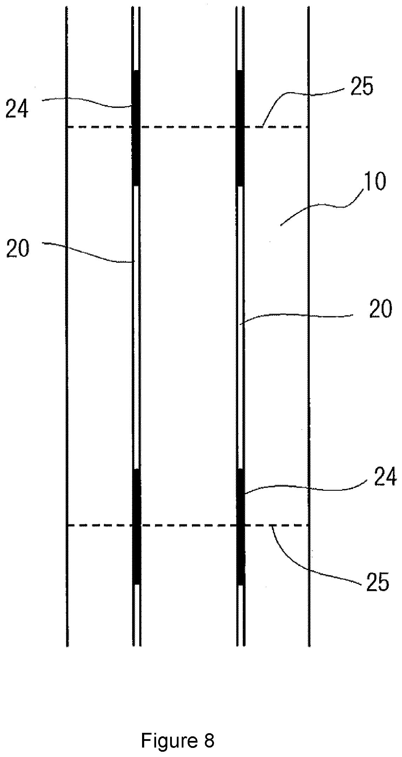

Figures 7 and 8 are examples of clearances in the case of a tape-shaped fabric with hollow fiber membranes knitted on the surface. In Figure 7, the hollow fiber membranes 20 are provided with loops 22 in relation to the knitted material 10, and the membranes 20 are not knitted into the knitted material 10 at the positions of the loops 22. In sewing, positions are sewn that are indicated by the seams 25, in other words, that have no hollow fiber membranes knitted into the knitted material A). 10. Each of the loops 22 corresponds to a clearance (clearance In Figure 8, the hollow fiber membrane has positions indicated by reference numerals 24 where the membranes are not knitted into the knitted material 10, but the membranes are not looped. Each of the non-knitting positions 24 corresponds to a clearance (clearance B). In sewing, the positions of the seams 25 are sewn while the hollow fiber membranes at the positions 24 are lifted up for avoidance.

### Reference Signs List

10 knitted material
10a upper material
10b lower material
15 tape-shaped fabric
20 hollow fiber membrane
22 clearance A
24 clearance B
25 seam
30 warp thread
40 weft thread
50 hollow fiber membrane stopper
60 pump
62 clothing
70 clothing
71 hollow fiber membrane
72 pump
73 water container
74 power source
75 switch

## Claims

1. A fabric comprising:
a hollow fiber membrane (20) having a tube wall with micropores and a pump (60) for supplying water to the hollow fiber membrane (20), wherein the water flows inside the hollow fiber membrane (20); **characterised in that** the fabric comprises a knitted material (10)
composed of a warp thread (30) and a weft thread (40), the hollow fiber membrane (20) being knitted into the knitted material (10) as an insertion thread in a longitudinal direction,
wherein the hollow fiber membrane (20) appears on one side of the knitted material (10), or the hollow fiber membrane (20) being laid in a double layer bag-like structure portion as an insertion thread in the knitted material (10), the knitted material being composed of an upper material (10a) and a lower material (10b), the double layer bag-like structure portion being formed by the upper material (10a) and lower material (10b) that are separated from each other, wherein the fabric comprises a pump (60) for supplying water to the hollow fiber membrane (20), wherein the water flows inside the hollow fiber membrane (20).

2. The fabric according to claim 1, wherein the hollow fiber membrane (20) appears in a corrugated shape on one side of the knitted material (10).

3. The fabric according to claim 1, wherein the knitted material (10) is warp-knitted.

4. The fabric according to claim 1, wherein the fabric is in a tape shape.

5. The fabric according to any of claims 1 to 4, wherein the hollow fiber membrane (20) includes a clearance (22, 24) and is arranged on the knitted material (10), the clearance being configured to avoid penetration of a needle into the hollow fiber membrane when the fabric is sewn.

## Patentansprüche

1. Textilstoff, umfassend:
eine Hohlfasermembran (20) mit einer Schlauchwand mit Mikroporen und eine Pumpe (60) zum Zuführen von Wasser zu der Hohlfasermembran (20), wobei das Wasser im Inneren der Hohlfasermembran (20) fließt; **dadurch gekennzeichnet, dass** der Textilstoff ein gewirktes Material (10) umfasst, das aus einem Kettfaden (30) und einem Schussfaden (40) besteht, wobei die Hohlfasermembran (20) als Einlegefaden in Längsrichtung in das gewirkte Material (10) gewirkt ist,
wobei die Hohlfasermembran (20) auf einer Seite des gewirkten Materials (10) erscheint, oder
wobei die Hohlfasermembran (20) in einem doppelschichtigen, beutelartigen Strukturabschnitt als Einlegefaden in das gewirkte Material (10) eingelegt ist, wobei das gewirkte Material aus einem oberen Material (10a) und einem unteren Material (10b) besteht,
wobei der doppelschichtige, beutelartige Strukturabschnitt durch das obere Material (10a) und das untere Material (10b) gebildet ist, die voneinander getrennt sind, wobei der Textilstoff eine Pumpe (60) zum Zuführen von Wasser zu der Hohlfasermembran (20) aufweist, wobei das Wasser im Inneren der Hohlfasermembran (20) fließt.

2. Textilstoff nach Anspruch 1, wobei die Hohlfasermembran (20) auf einer Seite des gewirkten Materials (10) in einer gewellten Form erscheint.

3. Textilstoff nach Anspruch 1, wobei das gewirkte Material (10) kettengewirkt ist.

4. Textilstoff nach Anspruch 1, wobei der Textilstoff Bandform hat.

5. Textilstoff nach einem der Ansprüche 1 bis 4, wobei die Hohlfasermembran (20) einen Abstand (22, 24) aufweist und auf dem gewirkten Material (10) angeordnet ist, wobei der Abstand dazu ausgebildet ist, ein Eindringen einer Nadel in die Hohlfasermembran beim Nähen des Textilstoffs zu vermeiden.

## Revendications

1. Tissu comprenant:
une membrane à fibres creuses (20) présentant une paroi tubulaire dotée de micropores et une pompe (60) destinée à alimenter en eau la membrane à fibres creuses (20), l'eau s'écoulant à l'intérieur de la membrane à fibres creuses (20); **caractérisé en ce que** le tissu comprend une étoffe tricotée (10) composé d'un fil de chaîne (30) et d'un fil de trame (40), la membrane à fibres creuses (20) étant tricotée dans l'étoffe tricotée (10) en tant que fil d'insertion dans une direction longitudinale,
la membrane à fibres creuses (20) apparaissant d'un côté de l'étoffe tricotée (10), ou
la membrane à fibres creuses (20) étant disposée dans une partie de structure en forme de poche à double couche en tant que fil d'insertion dans l'étoffe tricotée (10), l'étoffe tricotée (10) étant composé d'un matériau supérieur (10a) et d'un matériau inférieur (10b),
la partie à structure en forme de poche à double couche étant formée par le matériau supérieur (10a) et le matériau inférieur (10b) qui sont séparés l'un de l'autre, dans lequel le tissu comprend une pompe (60) destinée à alimenter en eau la membrane à fibres creuses (20), l'eau s'écoulant à l'intérieur de la membrane à fibres creuses (20).

2. Tissu selon la revendication 1, dans lequel la membrane à fibres creuses (20) présente une forme ondulée sur un côté de l'étoffe tricotée (10).

3. Tissu selon la revendication 1, dans lequel l'étoffe tricotée (10) est tricoté en chaîne.

4. Tissu selon la revendication 1, dans lequel le tissu se présente sous la forme d'un ruban.

5. Tissu selon l'une quelconque des revendications 1 à 4, dans lequel la membrane à fibres creuses (20) comprend un dégagement (22, 24) et est disposée sur l'étoffe tricotée (10), le dégagement étant configuré pour empêcher la pénétration d'une aiguille dans la membrane à fibres creuses lorsque le tissu est cousu.
